# EUROPÄISCHE PATENTANMELDUNG

(11) **EP 2 554 754 A1**
(43) Veröffentlichungstag der Anmeldung: **06.02.2013**
(21) Anmeldenummer: 12004084.5
(22) Anmeldetag: 25.05.2012
(51) Int. Cl.: E03C 1/08

(54) **Strahlregler mit Rotorscheibe**

(30) Priorität: 05.08.2011 DE 202011104072 U
(71) Anmelder: Neoperl GmbH, 79379 Müllheim (DE)
(72) Erfinder: Wels, Christoph, 79379 Müllheim (DE); Stein, Alexander, 79241 Ihringen (DE)
(74) Vertreter: Maucher, Wolfgang

(57) **Zusammenfassung**

Die Erfindung betrifft einen Strahlregler (1) mit einem Strahlreglergehäuse, in dessen Gehäuse-Innenraum eine Rotorscheibe (9) drehbar gelagert ist, die (9) in zumindest einem Scheiben-Teilbereich flüssigkeitsdurchlässig ausgebildet ist und die (9) mit einem Rotorscheibenantrieb in Antriebsverbindung steht, welcher die als Drehantriebskraft genutzte Strömung des durch das Strahlreglergehäuse durchströmenden Wassers in eine Rotationsbewegung der Rotorscheibe (9) umsetzt. Mit dem erfindungsgemäßen Strahlregler lässt sich eine erhebliche Wasserersparnis erzielen, ohne dass deshalb eine Abnahme des Volumenstroms deutlich erkennbar wäre (vgl. Fig. 1).

## Beschreibung

Die Erfindung betrifft einen Strahlregler. Strahlregler sind bereits in den verschiedensten Ausführungen als belüfteter oder unbelüfteter Strahlregler bekannt. Solche Strahlregler sollen das aus einer sanitären Auslaufarmatur ausströmende Wasser zu einem homogenen, nicht-spritzenden und gegebenenfalls auch perlend-weichen Wasserstrahl formen. Solche Strahlregler sollen aber nicht nur den mit dem austretenden Wasser verbundenen Komfort für den Anwender verbessern, - sondern häufig auch eine deutliche Wasserersparnis bewirken. So lässt sich durch die Beimischung von Umgebungsluft in das durch den Strahlregler durchströmende Wasser eine Wasserersparnis erzielen, ohne dass der Volumenstrom erkennbar abnehmen würde.

Die Möglichkeiten, durch eine Luftbeimischung in das durch den Strahlregler durchströmende Wasser eine Wasserersparnis zu erzielen, sind aber begrenzt.

Es besteht daher die Aufgabe, einen Strahlregler der eingangs erwähnten Art zu schaffen, mit dem zusätzlich zu oder statt einer Luftbeimischung eine deutliche Wasserersparnis erreichbar ist, ohne dass deshalb eine Abnahme des Volumenstroms deutlich erkennbar wäre.

Die erfindungsgemäße Lösung dieser Aufgabe besteht insbesondere in den Merkmalen des geltenden Anspruchs 1.

Der erfindungsgemäße Strahlregler weist im Gehäuse-Innenraum seines Strahlreglergehäuses eine drehbar gelagerte Rotorscheibe auf, die in zumindest einem Scheiben-Teilbereich flüssigkeitsdurchlässig ausgebildet ist. Diese Rotorscheibe steht mit einem Rotorscheibenantrieb in Antriebsverbindung, welcher die als Drehantriebskraft genutzte Strömung des durch das Strahlreglergehäuse durchströmenden Wassers in eine Rotationsbewegung der Rotorscheibe umsetzt. Mit Hilfe dieses Rotorscheibenantriebes kann die als Drehantriebskraft genutzte Strömung in eine Rotationsbewegung der Rotorscheibe umgesetzt werden. Da das Wasser des Strahlreglergehäuses im Bereich der Rotorscheibe nur im Bereich der flüssigkeitsdurchlässig ausgebildeten Scheiben-Teilbereiche passieren kann, wird ein Wasserstrahl geformt, der beispielsweise einen wendelförmigen Querschnitt aufweisen oder - u.a. abhängig von der Drehzahl der Rotorscheibe - durch gepulste Strahlteilbereiche gebildet sein kann. Der erfindungsgemäße Strahlregler erzeugt somit zum Beispiel einen zeitlich gepulsten Wasserstrahl durch kurzzeitiges Öffnen und Schließen des Durchflusses. Durch diese Durchflussunterberechnungen entsteht anteilig zu ihrer Dauer eine Reduzierung des kumulierten Volumenstromes. Ist die Unterbrechungsdauer kürzer als die zeitliche Auflösungsfähigkeit des menschlichen Auges, dann wird der gepulste Wasserstrahl für den Benutzer nicht einmal als gepulst oder als kurzzeitig unterbrochen wahrgenommen. Selbst wenn die Unterbrechungszeiten länger sind, so dass der Benutzer sie deutlich visuell wahrnehmen kann, mindert das aber nicht den Komfort beim Benutzen einer sanitären Auslaufarmatur. Mit dem erfindungsgemäßen Strahlregler lässt sich somit eine deutliche Wasserersparnis erzielen, ohne dass deshalb eine Abnahme des Volumenstroms klar erkennbar wäre.

Um die Rotorscheibe zumindest in Scheiben-Teilbereichen flüssigkeitsdurchlässig auszugestalten, kann die Rotorscheibe zumindest einen, vorzugsweise bis zur Scheiben-Drehachse reichenden und insbesondere kuchenstückförmig ausgebildeten Einschnitt aufweisen. Im Bereich dieses zumindest einen Scheiben-Einschnittes ist die Rotorscheibe flüssigkeitsdurchlässig. Um die Rotorscheibe einerseits flüssigkeitsdurchlässig und andererseits ausreichend stabil ausgestalten zu können, sieht eine bevorzugte Ausführungsform gemäß der Erfindung jedoch vor, dass die Rotorscheibe mehrere Durchflusslöcher hat, die vorzugsweise in unterschiedlichen Abständen zur Drehachse angeordnet sind und auf deren Kreisbahn um die Drehachse zumindest ein Kreisbahnabschnitt ungelocht ist. Bei dieser bevorzugte Ausführungsform ist die Rotorscheibe nur im Bereich der Durchflusslöcher flüssigkeitsdurchlässig ausgestaltet.

Eine vorteilhafte Ausführungsform gemäß der Erfindung sieht vor, dass der Rotorscheibenantrieb zumindest eine, auf der Zu- und/oder Abströmseite der Rotorscheibe vorstehende Antriebsflosse hat, die derart schräg zur Rotorscheiben-Ebene angeordnet ist, dass das auf die zumindest eine Antriebsflosse auftreffende Wasser eine Drehantriebskraft auf die Rotorscheibe ausübt.

Eine bevorzugte Weiterbildung gemäß der Erfindung, die eine besonders platzsparende Bauweise des erfindungsgemäßen Strahlreglers begünstigt und die mit vergleichsweise geringem Aufwand herstellbar ist, sieht demgegenüber vor, dass als Rotorscheibenantrieb zumindest eines der Durchflusslöcher eine schräg zur Drehachse geneigte Lochlängsachse hat, derart, dass durch das zumindest eine schräg geneigte Durchflussloch durchströmende Wasser eine Drehantriebskraft auf die Rotorscheibe ausübt.

Mit dem aus dem erfindungsgemäßen Strahlregler ausströmenden Wasserstrom wird keinerlei Massagewirkung angestrebt, - vielmehr dient der durch die Rotorscheibe erzeugte pulsierende Wasserstrom lediglich der Wasserersparnis. Vorteilhaft kann es deshalb sein, wenn der Rotorscheibe im Strahlreglergehäuse zumindest ein strahlformendes und/oder strahlregulierendes Einsetzteil in Strömungsrichtung nachgeschaltet ist.

Dabei sehen besonders vorteilhafte Ausführungsformen gemäß der Erfindung vor, dass der Rotorscheibe im Strahlreglergehäuse eine Lochplatte und/oder zumindest eine Gitter- oder Netzstruktur in Strömungsrichtung nachgeschaltet sind.

Zweckmäßig ist es, wenn das zumindest eine, in das Strahlreglergehäuse einsetzbare Einsetzteil eine Gitter- oder Netzstruktur mit, sich an Kreuzungsknoten kreuzenden Stegen aufweist. Während die Gitterstruktur durch sich an den Kreuzungsknoten vorzugsweise im rechten Winkel kreuzende Stege gebildet sein kann, kann eine Netzstruktur durch jeweils eine Schar sich an Kreuzungsknoten kreuzender radialer und konzentrischer Stege gebildet sein.

Besonders vorteilhaft ist es, wenn dass zumindest eine, in das Strahlreglergehäuse einsetzbare Einsetzteil eine Gitter- oder Netzstruktur mit sich an Kreuzungsknoten kreuzenden Stegen aufweist. Ein solches, in das Strahlreglergehäuse einsetzbares Einsetzteil begünstigt die einfache Herstellung und Montage des erfindungsgemäßen Strahlreglers.

Der erfindungsgemäße Strahlregler kann als belüfteter oder unbelüfteter Strahlregler ausgestaltet sein. Sofern der erfindungsgemäße Strahlregler als belüfteter Strahlregler ausgebildet ist, kann es zweckmäßig sein, wenn der Rotorscheibe im Strahlreglergehäuse ein Strahlzerleger unmittelbar nachgeschaltet ist, welcher Strahlzerleger vorzugsweise als Lochplatte ausgestaltet ist.

Damit das Wasser jedenfalls in Zeitabständen jeden Bereich des Strahlquerschnitts durchströmt, ist es vorteilhaft, wenn die in der Rotorscheibe vorgesehenen Durchflusslöcher auf zumindest zwei, in unterschiedlichen Abständen zur Drehachse gelegenen Kreisbahnen angeordnet sind.

Ein homogenes Erscheinungsbild des im erfindungsgemäßen Strahlregler erzeugten Wasserstrahles wird begünstigt, wenn die Rotorscheibe durch zumindest zwei, einander in der Drehachse kreuzende Diagonalen in Sektoren unterteilbar ist und wenn sich in Drehrichtung der Rotorscheibe mit Durchflusslöchern versehene Sektoren und ungelochte Sektoren abwechseln.

Um die bei der Drehung der Rotorscheibe zu überwindenden Reibungskräfte möglichst gering zu halten, ist es zweckmäßig, wenn die Rotorscheibe nicht an ihrem Scheibenumfang -, sondern in ihrer Drehachse im Strahlreglergehäuse gelagert ist.

Eine leichtgängige und sichere Drehbewegung der Rotorscheibe wird begünstigt, wenn eine Drehlagerung und/oder Drehführung zwischen der Rotorscheibe und einer im Strahlreglergehäuse unverrückbar gehaltenen Lagerstütze vorgesehen ist.

Dabei sieht eine bevorzugte Ausführungsform gemäß der Erfindung vor, dass die Rotorscheibe eine im Querschnitt vorzugsweise kreisförmige Führungswandung oder einen Führungszapfen aufweist, die mit einem Führungszapfen oder einer Führungswandung an der Lagerstütze als Drehlagerung und/oder Drehführung zusammenwirkt.

Um die der Drehbewegung entgegenwirkenden Reibungskräfte möglichst gering zu halten, kann es zweckmäßig sein, wenn die Rotorscheibe über zwei einander beaufschlagende Lagerkugeln auf der Lagerstütze aufliegt.

Dabei sieht eine bevorzugte Ausführungsform vor, dass die einander beaufschlagenden Lagerkugeln vorzugsweise verchromte Metallkugeln sind. Liegt die Rotorscheibe über zwei, einander punktförmig berührende Metallkugeln auf der Lagerstütze auf, können die der Drehantriebskraft entgegenwirkenden Reibungskräfte vergleichsweise gering gehalten werden. Einem unerwünschten Verschleiß wird entgegengewirkt und die Reibungskräfte werden noch zusätzlich reduziert, wenn diese Metallkugeln verchromt sind.

Eine alternative Weiterbildung gemäß der Erfindung sieht vor, dass eine in der Drehachse angeordnete Lagerspitze an der Rotorscheibe oder an der Lagerstütze vorgesehen ist, welche die Lagerstütze oder die Rotorscheibe punktförmig beaufschlagt.

Die Reibungskräfte zwischen Rotorscheibe und Lagerstütze lassen sich zusätzlich reduzieren und einem Verschleiß kann wirkungsvoll entgegengewirkt werden, wenn die Rotorscheibe und/oder die Lagerstütze zumindest in dem das jeweils andere Lagerteil beaufschlagende Teilbereich aus Keramik hergestellt ist. Die für die Rotorscheibe vorgesehene Lagerstütze kann einstückig zumindest in einen Bestandteil des erfindungsgemäßen Strahlreglers eingeformt sein. Bevorzugt wird jedoch eine Ausführungsform, bei der die Lagerstütze als ein Bauteil ausgebildet ist, welches Bauteil vorzugsweise in ein in Strömungsrichtung nachgeschaltetes Bauelement des erfindungsgemäßen Strahlreglers eingesetzt ist.

Eine sichere Führung der Rotorscheibe um die Drehachse wird begünstigt, wenn die Rotorscheibe auch auf ihrer der Lagerstütze abgewandten Seite drehbar gelagert ist.

Dabei sieht eine bevorzugte Ausführungsform gemäß der Erfindung beispielsweise vor, dass die Rotorscheibe auf ihrer der Lagerstütze abgewandten Seite einen Führungszapfen oder eine Führungsöffnung hat, die mit einer mit dem Strahlreglergehäuse ortsfest verbundenen Führungsöffnung oder einem Führungszapfen als Drehlagerung zusammenwirkt.

Eine besonders kompakte und funktionssichere Ausführung gemäß der Erfindung sieht vor, dass der Strahlregler ein Vorsatzsieb hat, an dem ein Führungszapfen oder eine Führungsöffnung der Drehlagerung vorgesehen ist. Das Vorsatzsieb kann beispielsweise auf seiner Abströmseite einen Führungszapfen aufweisen, der in eine entsprechende Führungsöffnung in der Rotorscheibe vorsteht. Möglich ist aber auch, dass die Rotorscheibe auf ihrer der Lagerstütze abgewandten Zuströmseite einen vorzugsweise koaxial zur Drehachse angeordneten Führungszapfen aufweist, der in eine Führungsöffnung im Vorsatzsieb vorsteht.

Damit das von der Rotorscheibe kommende Wasser die Lagerstütze passieren kann, ist es vorteilhaft, wenn die Lagerstütze als Lochplatte ausgestaltet ist.

Dabei sieht eine bevorzugte Ausführungsform gemäß der Erfindung vor, dass die als Lochplatte ausgestaltete Lagerstütze den Strahlzerleger eines belüfteten Strahlreglers bildet. Weiterbildungen gemäß der Erfindung ergeben sich aus der Beschreibung in Verbindung mit den Zeichnungen. Nachstehend wir die Erfindung anhand bevorzugter Ausführungsbeispiele noch näher beschrieben.

Es zeigt:
- Fig. 1: einen teilweise aufgeschnitten dargestellten Strahlregler, der im Gehäuse-Innenraum seines Strahlreglergehäuses eine drehbar gelagerte Rotorscheibe hat,
- Fig. 2: den Strahlregler aus Figur 1 mit seiner hier nun ebenfalls teilweise aufgeschnitten dargestellten Rotorscheibe,
- Fig. 3: die Rotorscheibe des Strahlreglers aus Figur 1 und 2 mit dem zuströmseitig und dem abströmseitig angeordneten Strahlregler-Bestandteil in einer auseinandergezogenen perspektivischen Einzelteildarstellung,
- Fig. 4: die zwischen dem zuströmseitigen und dem abströmseitigen Strahlregler-Bestandteil drehbar gelagerte Rotorscheibe des in den Figuren 1 und 2 gezeigten Strahlreglers in einer teilweise aufgeschnittenen Perspektivdarstellung mit Blick auf die Zuströmseite,
- Fig. 5: die zwischen dem zuströmseitigen und dem abströmseitigen Strahlregler-Bestandteil drehbar gelagerte Rotorscheibe des in den Figuren 1 und 2 gezeigten Strahlreglers in einer teilweise aufgeschnittenen Perspektivdarstellung mit Blick auf die Abströmseite,
- Fig. 6: die in den Figuren 1 bis 5 gezeigte Rotorscheibe in einer Draufsicht auf ihre Zuströmseite,
- Fig. 7: die in den Figuren 1 bis 6 gezeigte Rotorscheibe in einem Längsschnitt durch Schnittebene VII-VII in Figur 6,
- Fig. 8: eine Detailansicht der längsgeschnittenen Rotorscheibe gemäß Figur 7 im Bereich eines der in der Rotorscheibe vorgesehenen Durchflusslöcher,
- Fig. 9: eine Rotorscheibe mit einer Drehlagerung, die durch zwei, vorzugsweise verchromte Metallkugeln gebildet ist, welche zwischen der Rotorscheibe und dem abströmseitigen Strahlregler-Bestandteil vorgesehen sind,
- Fig. 10: die Drehlagerung der Rotorscheibe aus Figur 9 in einer Detaildarstellung im Bereich der Metallkugeln,
- Fig. 11: eine Rotorscheibe mit einer Drehlagerung, die aus einem an der Rotorscheibe vorgesehenen Führungszapfen gebildet ist, der in eine Führungsöffnung in dem abströmseitigen Strahlregler-Bestandteil eingesetzt ist, wobei Führungszapfen und der die Führungsöffnung umgrenzende Wandungsabschnitt vorzugsweise aus Keramikmaterial hergestellt sind,
- Fig. 12: die Drehlagerung der Rotorscheibe aus Figur 11 im Bereich des die Führungsöffnung umgrenzenden Wandungsabschnitts sowie des ebenfalls aus Keramik hergestellten Führungszapfens,
- Fig. 13: eine Rotorscheibe mit einer Drehlagerung, die eine an die Rotorscheibe abströmseitig angeformte Lagerspitze aufweist, welche Lagerspitze die abströmseitig angeordnete Lagerstütze nur punktförmig beaufschlagt, und
- Fig. 14: die Drehlagerung der Rotorscheibe aus Figur 13 in einer Detaildarstellung im Bereich der an die Rotorscheibe angeformten Lagerspitze.

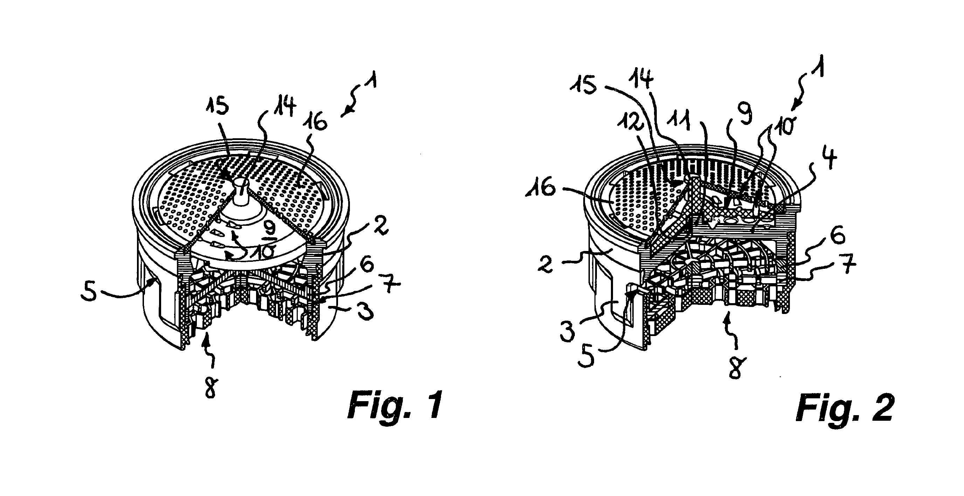

In den Figuren 1 und 2 ist ein Strahlregler 1 dargestellt, der in ein hier nicht gezeigtes Auslaufmundstück einsetzbar ist, welches am Wasserauslauf einer sanitären Auslaufarmatur montierbar ist. Der Strahlregler 1 soll das aus dem Wasserauslauf ausströmende Wasser zu einem homogenen und nicht-spritzenden Wasserstrahl formen.

Der Strahlregler 1 weist ein Strahlreglergehäuse auf. Das Strahlreglergehäuse ist hier zweiteilig ausgestaltet und weist ein zuströmseitiges und ein damit lösbar verbindbares abströmseitiges Gehäuseteil 2, 3 auf. An das zuströmseitige Gehäuseteil 2 ist ein Strahlzerleger 4 angeformt, der das durchströmende Wasser in eine Vielzahl von Einzelstrahlen aufteilen und diese Einzelstrahlen derart beschleunigen soll, dass auf der Abströmseite des Strahlzerlegers 4 ein Unterdruck entsteht. Der auf der Abströmseite des Strahlzerlegers 4 erzeugte Unterdruck saugt Umgebungsluft durch die am Gehäuseumfang vorgesehenen Belüftungsöffnungen 5, wo die angesaugte Umgebungsluft mit den vom Strahlzerleger 4 erzeugten Einzelstrahlen vermischt wird, bevor das derart mit Luft durchmischte Wasser von in Durchströmrichtung nachfolgenden und Gitter- oder Netzstrukturen aufweisenden Einsetzteilen 6, 7 abgebremst werden kann. An das abströmseitige Gehäuseteil 3 ist auf seiner Auslaufstirnseite ein Strömungsgleichrichter 8 angeformt, der das ausströmende und mit Luft durchmischte Wasser zu einem homogenen und perlend-weichen Wasserstrahl zusammenzuführen hat. Der Strömungsgleichrichter 8, der gleichzeitig ein Hochdrücken der in das Strahlreglergehäuse eingelegten Einsetzteile 6, 7 verhindert, kann dazu beispielsweise eine wabenzellenartige Lochstruktur, eine Gitterstruktur oder - wie hier - eine Netzstruktur mit radialen sowie sich damit an Kreuzungsknoten kreuzenden konzentrischen Stegen aufweisen.

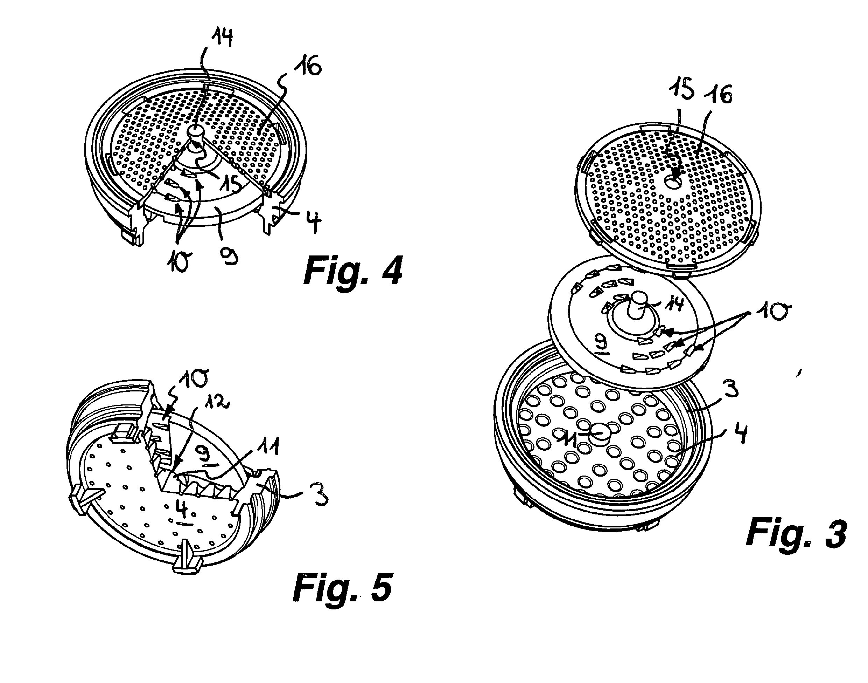

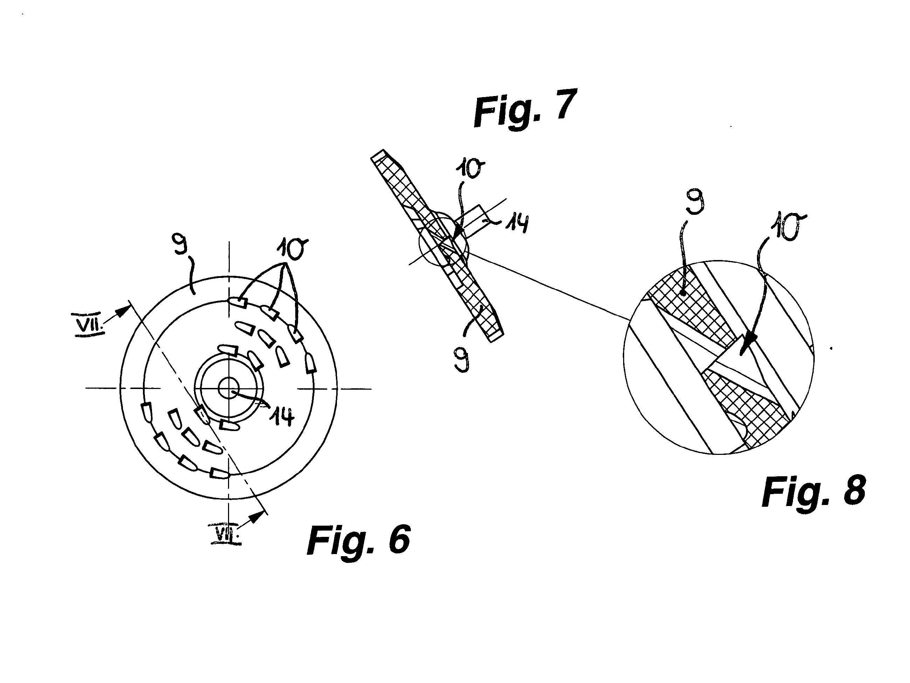

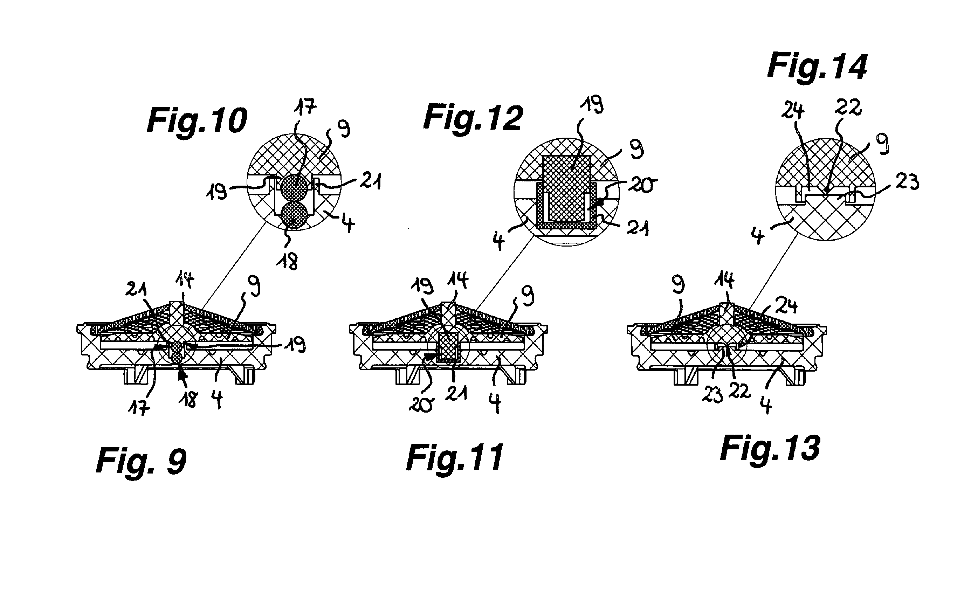

Durch die Luftbeimischung im Gehäuseinnenraum des Strahlreglers 1 lässt sich die ausströmende Wassermenge reduzieren, ohne dass damit gleichzeitig eine deutliche Reduktion des Wasservolumens erkennbar wäre. Um die angestrebte Wasserersparnis noch zusätzlich zu erhöhen, ist im Gehäuseinnenraum des Strahlreglergehäuses eine hier im wesentlichen kreisrund ausgestaltete Rotorscheibe 9 um eine Drehachse drehbar gelagert. Diese Rotorscheibe 9 ist zumindest in einem Scheiben-Teilbereich flüssigkeitsdurchlässig ausgestaltet und steht mit einem Rotorscheibenantrieb in Antriebsverbindung, welcher die als Drehantriebskraft genutzte Strömung des durch das Strahlreglergehäuse durchströmenden Wassers in eine Rotationsbewegung der Rotorscheibe 9 umsetzt. Um die Rotorscheibe 9 zumindest in Scheiben-Teilbereichen flüssigkeitsdurchlässig auszugestalten, weist die hier dargestellte Rotorscheibe 9 mehrere Durchflusslöcher 10 auf, die in unterschiedlichen Abständen zur Drehachse angeordnet sind. Wie aus Figur 1 und den Draufsichten in den Figuren 3 und 6 deutlich wird, ist auf den Kreisbahnen der Durchflusslöcher 10 zumindest ein Kreisbahnabschnitt ungelocht. In den Längsschnitten in Figur 8 und 9 ist erkennbar, dass zumindest eines der Durchflusslöcher 10 und hier alle Durchflusslöcher 10 eine schräg zur Drehachse geneigte Lochlängsachse aufweisen, derart, dass das durch die schräggeneigten Durchflusslöcher 10 durchströmende Wasser eine Drehantriebskraft auf die Rotorscheibe 9 ausübt.

Der hier dargestellte Strahlregler 1 weist also im Gehäuse-Innenraum seines Strahlreglergehäuses die drehbar gelagerte Rotorscheibe 9 auf, die mehrere, in unterschiedlichen Abständen zur Drehachse angeordnete Durchflusslöcher 10 hat. Auf der Kreisbahn um die Drehachse jedes dieser Durchflusslöcher 10 können zwar - wie hier - weitere Durchflusslöcher 10 vorgesehen sein, - jedoch ist zumindest ein Kreisbahnabschnitt der jeweiligen Kreisbahn ungelocht. Zumindest eines dieser Durchflusslöcher 10 weist eine derart schräg zur Drehachse der Rotorscheibe geneigte Lochlängsachse auf, dass das durch dieses zumindest eine Durchflussloch 10 durchströmende Wasser eine Drehantriebskraft auf die Rotorscheibe 9 ausübt und diese zum Rotieren bringt. Da das Wasser das Strahlreglergehäuse im Bereich der Rotorscheibe 9 im wesentlichen nur an den Durchflusslöchern 10 passieren kann, erhält der stromabwärts liegende Strahlzerleger 4 das auf ihn zuströmende Wasser nur durch die Durchflusslöcher 10 der rotierenden Rotorscheibe 9. Der Strahlzerleger 4 erhält somit nur einen, von der Drehzahl der Rotorscheibe 9 abhängigen gepulsten Strahl und beschleunigt diesen dann zur weiteren Luftanreicherung und -beimischung. Die Pulsfrequenz wird dabei von der Drehzahl und von der Anzahl der auf der jeweiligen Kreisbahn der Rotorscheibe 9 enthaltenen Durchflusslöcher 10 definiert. Dabei wird ein Wasserstrahl geformt, der durch kurzzeitiges Öffnen und Schließen des Durchflusses zeitlich gepulst sein kann. Durch diese Durchflussunterbrechungen entsteht anteilig zu ihrer Dauer eine Reduzierung des kumulierten Volumenstromes. Ist die Unterbrechungsdauer kürzer als die zeitliche Auflösungsfähigkeit des menschlichen Auges, dann wird der gepulste Wasserstrahl für den Benutzer nicht einmal als gepulster oder kurzzeitig unterbrochener Wasserstrahl wahrgenommen. Alternativ kann durch diese Anordnung eine Kombination aus helix- und spiralförmigem Strahl (sich mit der Strahllänge aufweitende Helix) gebildet oder ein Strahl mit wendelförmigem Querschnitt erzeugt werden. Mit dem hier dargestellten Strahlregler 1 lässt sich somit eine zusätzliche Wasserersparnis erreichen, ohne dass deshalb eine Abnahme des Volumenstroms deutlich erkennbar wäre.

In den Figuren 3 und 6 ist erkennbar, dass die in der Rotorscheibe 9 vorgesehenen Durchflusslöcher 10 auf zumindest zwei und hier auf drei, in unterschiedlichen Abständen zur Drehachse gelegenen Kreisbahnen angeordnet sind. In Figur 6 ist angedeutet, dass die Rotorscheibe 9 durch zumindest zwei, einander in der Drehachse kreuzende Diagonalen in Sektoren unterteilbar ist und dass sich in Drehrichtung der Rotorscheibe 9 mit Durchflusslöchern 10 versehene Sektoren und ungelochte Sektoren abwechseln. In den Figuren 3 und 6 ist erkennbar, dass hier zwei, mit Durchflusslöchern 10 versehene Sektoren sowie zwei ungelochte Sektoren der Rotorscheibe 9 gegenüberliegen.

In der teilweise aufgeschnittenen Perspektivdarstellung in Figur 2 ist erkennbar, dass die Rotorscheibe 9 in ihrer Drehachse im Strahlreglergehäuse gelagert ist. Dabei ist zwischen der Rotorscheibe 9 und einer im Strahlreglergehäuse unverrückbar gehaltenen und hier durch den Strahlzerleger 4 gebildeten Lagerstütze eine Drehlagerung und Drehführung vorgesehen. An den hier als Lochplatte ausgestalteten Strahlzerleger 4 ist dazu zuströmseitig ein zentraler Führungszapfen 11 angeformt, der in eine Führungsöffnung 12 auf der Abströmseite der Rotorscheibe 9 vorsteht, welche Führungsöffnung 12 von einer im Querschnitt kreisförmigen Führungswandung umgrenzt ist.

Um eine sichere Drehbewegung der Rotorscheibe 9 um die Drehachse sicherzustellen, ist die Rotorscheibe 9 auch auf ihrer der Lagerstütze abgewandten Seite drehbar gelagert. Die Rotorscheibe 9 weist dazu auf ihrer der Lagerstütze abgewandten Seite einen Führungszapfen 14 auf, der in eine mit dem Strahlreglergehäuse ortsfest verbundene Führungsöffnung 15 vorsteht und mit dieser als zuströmseitige Drehlagerung zusammenwirkt. Diese Führungsöffnung 15 ist zentral in einem Vorsatzsieb 16 vorgesehen, das ein Eindringen von Schmutzpartikeln in den Gehäuseinnenraum des Strahlreglergehäuses verhindern soll und mit diesem lösbar verbunden ist.

In den Fig. 9 bis 14 sind verschiedene Möglichkeiten dargestellt, die Rotorscheibe 9 im Gehäuseinnenraum des Strahlreglers drehbar zu lagern, ohne dass der Drehbewegung der Rotorscheibe 9 übergroße Reibungskräfte entgegenwirken.

Bei dem in Fig. 9 und 10 gezeigten Ausführungsbeispiel liegt die Rotorscheibe 9 über zwei einander punktförmig beaufschlagende Lagerkugeln 17, 18 auf dem auch hier als Lagerstütze dienenden Strahlzerleger 4 auf. Diese Lagerkugeln 17, 18, von denen die eine in die Abströmseite der Rotorscheibe 9 und die andere in die Zuströmseite der Lagerstütze eingeformt ist, sind vorzugsweise als insbesondere oberflächig verchromte Metallkugeln ausgebildet.

Bei dem in Fig. 11 und 12 gezeigten Ausführungsbeispiel ist auf der Abströmseite der Rotorscheiben 9 ein Führungszapfen 19 vorgesehen, der in eine Führungsöffnung 20 in dem als Lagerstütze dienenden Strahlzerleger 4 eingereift. Sowohl der die Führungsöffnung 20 umgrenzende Wandungsabschnitt 21 als auch der Führungszapfen 19 sind hier aus Keramikmaterial hergestellt, um die der Antriebskraft entgegenwirkenden Reibungskräfte möglichst gering zu halten und um einem Verschleiß entgegenzuwirken.

Bei dem in Fig. 13 und 14 gezeigten Ausführungsbeispiel ist an die Abströmseite der Rotorscheibe 9 eine Lagerspitze 22 angeformt, die die benachbarte Stirnseite eines an die Lagerstütz angeformten Führungszapfens 23 punktförmig beaufschlagt.

Aus einem Vergleich der Fig. 9 bis 14 wird deutlich, dass die Rotorscheibe 9 eine im Querschnitt vorzugsweise kreisförmige Führungswandung 24 (vgl. Fig. 13, 14) oder einen Führungszapfen 19 (vgl. Fig. 9, 10; 11, 12) aufweist, die mit einem Führungszapfen 23 (vgl. Fig. 13, 14) oder einer Führungswandung 21 (vgl. Fig. 9, 10; 11, 12) an der hier als Strahlzerleger 4 ausgebildeten Lagerstütze als Drehführung zusammenwirken.

### Bezugszeichenliste

- 1: Strahlregler
- 2: Gehäuseteil (zuströmseitig)
- 3: Gehäuseteil (abströmseitig)
- 4: Strahlzerleger
- 5: Belüftungsöffnung
- 6: Einsetzteil (oberes)
- 7: Einsetzteil (unteres)
- 8: Strömungsgleichrichter (am Gehäuseteil 3)
- 9: Rotorscheibe
- 10: Durchflusslöcher (in Rotorscheibe 9)
- 11: Führungszapfen (an Strahlzerleger 4 gem. Fig. 1und 2)
- 12: Führungsöffnung (an Rotorscheibe 9 gem. Fig. 1 und 2)
- 13: Führungswandung (von Führungsöffnung 12 in Fig. 1 und 2)
- 14: Führungszapfen (auf Zuströmseite der Rotorscheibe 9)
- 15: Führungsöffnung (im Vorsatzsieb 16)
- 16: Vorsatzsieb
- 17: Lagerkugel (obere)
- 18: Lagerkugel (untere)
- 19: Führungszapfen (an Rotorscheibe 9 gem. Fig. 11, 12)
- 20: Führungsöffnung (im Strahlzerleger 4 gem. Fig. 11, 12)
- 21: Wandungsabschnitt (, der die Führungsöffnung 20 in Fig. 11, 12 umgrenzt)
- 22: Lagerspitze (gem. Fig. 13 ,14)
- 23: Führungszapfen (am Strahlzerleger 4 gem. Fig. 13, 14)
- 24: Führungswandung (Rotorscheibe 9 gem. Fig. 13, 14)

## Patentansprüche

1. Strahlregler (1) mit einem Strahlreglergehäuse, in dessen Gehäuse-Innenraum eine Rotorscheibe (9) drehbar gelagert ist, die (9) in zumindest einem Scheiben-Teilbereich flüssigkeitsdurchlässig ausgebildet ist und die (9) mit einem Rotorscheibenantrieb in Antriebsverbindung steht, welcher die als Drehantriebskraft genutzte Strömung des durch das Strahlreglergehäuse durchströmenden Wassers in eine Rotationsbewegung der Rotorscheibe (9) umsetzt.

2. Strahlregler nach Anspruch 1, **dadurch gekennzeichnet, dass** die Rotorscheibe (9) mehrere Durchflusslöcher (10) hat, die (10) vorzugsweise in unterschiedlichen Abständen zur Drehachse angeordnet sind und auf deren Kreisbahn um die Drehachse zumindest ein Kreisbahnabschnitt ungelocht ist.

3. Strahlregler nach Anspruch 1 oder 2, **dadurch gekennzeichnet, dass** die Rotorscheibe den Durchfluss zu zumindest einem in Strömungsrichtung nachfolgenden durchflussbegrenzenden Element im Strahlreglergehäuse abwechselnd freigibt oder verschließt.

4. Strahlregler nach einem der Ansprüche 1 bis 3, **dadurch gekennzeichnet, dass** der Rotorscheibenantrieb zumindest eine, auf der Zu- und/oder Abströmseite der Rotorscheibe vorstehende Antriebsflosse hat, die derart schräg zur Rotorscheiben-Ebene angeordnet ist, dass das auf der zumindest einen Antriebsflosse auftreffende Wasser eine Drehantriebskraft auf die Rotorscheibe ausübt.

5. Strahlregler nach einem der Ansprüche 1 bis 4, **dadurch gekennzeichnet, dass** als Rotorscheibenantrieb zumindest eines der Durchflusslöcher (10) der Rotorscheibe (9) eine schräg zur Drehachse geneigte Lochlängsachse hat, derart, dass das durch das zumindest eine schräg geneigte Durchflussloch (10) durchströmende Wasser eine Drehantriebskraft auf die Rotorscheibe (9) ausübt.

6. Strahlregler nach einem der Ansprüche 1 bis 5, **dadurch gekennzeichnet, dass** der Rotorscheibe (9) im Strahlreglergehäuse zumindest ein stahlformendes und/oder strahlregulierendes Einsetzteil in Strömungsrichtung nachgeschaltet ist.

7. Strahlregler nach einem der Ansprüche 1 bis 6, **dadurch gekennzeichnet, dass** der Rotorscheibe (9) im Strahlreglergehäuse eine Lochplatte und/oder zumindest eine Gitter- oder Netzstruktur in Strömungsrichtung nachgeschaltet ist.

8. Strahlregler nach einem der Ansprüche 1 bis 7, **dadurch gekennzeichnet, dass** das zumindest eine, in das Strahlreglergehäuse einsetzbare Einsetzteil eine Gitter- oder Netzstruktur mit, sich an Kreuzungsknoten kreuzenden Stegen aufweist.

9. Strahlregler nach einem der Ansprüche 1 bis 8, **dadurch gekennzeichnet, dass** der Rotorscheibe (9) ein Strahlzerleger (4) unmittelbar nachgeschaltet ist, der vorzugsweise als Lochplatte ausgestaltet ist.

10. Strahlregler nach einem der Ansprüche 1 bis 9, **dadurch gekennzeichnet, dass** die in der Rotorscheibe (9) vorgesehenen Durchflusslöcher (10) auf zumindest zwei, in unterschiedlichen Abständen zur Drehachse gelegenen Kreisbahnen angeordnet sind.

11. Strahlregler nach einem der Ansprüche 1 bis 10 **dadurch gekennzeichnet, dass** die Rotorscheibe (9) durch zumindest zwei, einander in der Drehachse kreuzende Diagonalen in Sektoren unterteilbar ist, und dass sich in Drehrichtung der Rotorscheibe (9) mit Durchflusslöchern (10) versehene Sektoren und ungelochte Sektoren abwechseln.

12. Strahlregler nach einem der Ansprüche 1 bis 11, **dadurch gekennzeichnet, dass** die Rotorscheibe (9) in ihrer Drehachse im Strahlreglergehäuse gelagert ist.

13. Strahlregler nach einem der Ansprüche 1 bis 12, **dadurch gekennzeichnet, dass** eine Drehlagerung und/oder Drehführung zwischen der Rotorscheibe (9) und einer im Strahlreglergehäuse unverrückbar gehaltenen Lagerstütze vorgesehen ist.

14. Strahlregler nach einem der Ansprüche 1 bis 13, **dadurch gekennzeichnet, dass** die Rotorscheibe (9) eine im Querschnitt vorzugsweise kreisförmige Führungswandung oder einen Führungszapfen aufweist, die mit einem Führungszapfen (11) oder einer Führungswandung an der Lagerstütze als Drehführung zusammenwirkt.

15. Strahlregler nach einem der Ansprüche 1 bis 14, **dadurch gekennzeichnet, dass** die Rotorscheibe (9) über zwei einander beaufschlagende Lagerkugeln (17, 18) auf der Lagerstütze aufliegt.

16. Strahlregler nach einem der Ansprüche 1 bis 15, **dadurch gekennzeichnet, dass** die einander beaufschlagenden Lagerkugeln (17, 18) vorzugsweise verchromte Metallkugeln sind.

17. Strahlregler nach einem der Ansprüche 1 bis 16, **dadurch gekennzeichnet, dass** eine in der Drehachse angeordnete Lagerspitze (22) an der Rotorscheibe (9) oder an der Lagerstütze vorgesehen ist, welche die Lagerstütze oder die Rotorscheibe (9) punktförmig beaufschlagt.

18. Strahlregler nach einem der Ansprüche 1 bis 17, **dadurch gekennzeichnet, dass** die Rotorscheibe (9) und/oder die Lagerstütze zumindest in dem das jeweils andere Lagerteil beaufschlagenden Teilbereich aus Keramik hergestellt ist.

19. Strahlregler nach einem der Ansprüche 1 bis 18, **dadurch gekennzeichnet, dass** die Rotorscheibe (9) auf ihrer der Lagerstütze abgewandten Seite drehbar gelagert ist.

20. Strahlregler nach Anspruch 19, **dadurch gekennzeichnet, dass** die Rotorscheibe (9) auf ihrer der Lagerstütze abgewandten Seite einen Führungszapfen (14) oder eine Führungsöffnung hat, die mit einer mit dem Strahlreglergehäuse ortsfest verbundenen Führungsöffnung (15) oder einem Führungszapfen als Drehlagerung zusammenwirkt.

21. Strahlregler nach Anspruch 20, **dadurch gekennzeichnet, dass** der Strahlregler (1) ein Vorsatzsieb (16) hat, an dem ein Führungszapfen oder eine Führungsöffnung (15) der Drehlagerung vorgesehen ist.

22. Strahlregler nach einen der Ansprüche 13 bis 21, **dadurch gekennzeichnet, dass** die Lagerstütze als Lochplatte ausgestaltet ist.

23. Strahlregler nach Anspruch 22, **dadurch gekennzeichnet, dass** die als Lochplatte ausgestaltete Lagerstütze den Strahlzerleger (4) eines belüfteten Strahlreglers (1) bildet.
